# EUROPÄISCHE PATENTSCHRIFT

(11) **EP 4 232 783 B1**
(45) Veröffentlichungstag und Bekanntmachung des Hinweises auf die Patenterteilung: **13.08.2025**
(21) Anmeldenummer: 20797466.8
(22) Anmeldetag: 26.10.2020
(51) Int. Cl.: G01F 23/284, G01F 25/20

(54) **TOPOLOGIEERFASSENDES FÜLLSTANDMESSGERÄT**
TOPOLOGY DETECTING LEVEL MEASURING DEVICE
APPAREIL DE MESURE DE NIVEAU DE DÉTECTION DE TOPOLOGIE

(43) Veröffentlichungstag der Anmeldung: 30.08.2023
(73) Patentinhaber: VEGA Grieshaber KG, 77709 Wolfach (DE)
(72) Erfinder: WÄLDE, Steffen, 78078 Niedereschach (DE)
(74) Vertreter: Patentanwälte Bauer Vorberg Kayser
(86) Internationale Anmeldenummer: PCT/EP2020/080067
(87) Internationale Veröffentlichungsnummer: WO 2022/089720

(56) Entgegenhaltungen:
- EP-A1- 3 255 392
- EP-A1- 3 467 450
- EP-A2- 1 933 117
- WO-A1-2019/040946
- DE-A1- 102015 106 187

## Beschreibung

Die Erfindung betrifft allgemein die Füllstandmessung. Insbesondere betrifft die Erfindung ein Füllstandmessgerät zum Bestimmen einer Topologie einer Füllgutoberfläche, ein Verfahren zum Bestimmen einer Topologie einer Füllgutoberfläche, ein Programmelement für ein Füllstandmessgerät sowie ein computerlesbares Medium mit einem solchen Programmelement.

Aus dem Stand der Technik sind verschiedene Sensoren zur Bestimmung eines Füllstandes bzw. Grenzstandes von Füllgut bekannt. Insbesondere kann es sich bei einem solchen Sensor um ein Radarfüllstandmessgerät handeln. Solche Radarfüllstandmessgeräte sind beispielsweise mit Hornantennen ausgestattet, über die ein eingekoppeltes Hochfrequenz-Signal (HF-Signal) in Richtung des Schüttgutes abgestrahlt wird. Dieses HF-Signal wird von dem Schüttgut reflektiert und das reflektierte Signal dann von einem kombinierten Sende- und Empfangssystem des Radarfüllstandmessgerätes empfangen und ausgewertet. Dabei erfolgt die Ermittlung des Füllstandes auf Basis der Laufzeit.

Ein Füllstandmessgerät zum Bestimmen eines Füllstandes und einer Topologie eines Füllgutes mit einer Radareinheit ist beispielsweise in EP 3 467 450 A1 beschrieben. Das Radarfüllstandmessgerät weist eine Antenne mit wenigstens einem Sendeelement und wenigstens zwei Empfangselementen, eine Steuereinheit und einen Speicher auf.

Bei solchen Füllstandmessgeräten und auch anderen aus dem Stand der Technik bekannten Sensoren zur Erfassung eines Füllstandes oder Grenzstandes erfolgt die Ermittlung des Füllstandes jeweils auf Basis einer Messung in einem Punkt bzw. einem kleinen Bereich der Oberfläche des Füllguts, auf welchen das gesendete Signal fokussiert ist. Dies ist bei Flüssigkeiten unproblematisch. Diese bilden eine ebene, sich rein horizontal erstreckende Oberfläche aus und weisen damit einen konstanten Füllstand über die gesamte Oberfläche auf. Jedoch ist eine solche, aus dem Stand der Technik bekannte Füllstandmessung bei Schüttgütern, wie beispielsweise bei Kies oder Getreide, oft ungenau. Solche Schüttgüter weisen in der Regel keine rein horizontal orientierten Oberflächen mit einem konstanten Füllstand auf. Vielmehr können sich durch das Aufschütten von Schüttgut oder die Entnahme von Schüttgut Schüttkegel ausbilden, wobei der Füllstand in einigen Bereichen der Oberfläche höher ist als in anderen Bereichen. Ebenfalls kann es zu Anhaftungen des Schüttguts an Wänden von Behältern kommen, wobei diese abweichenden Füllstände mit den aus dem Stand der Technik bekannten Füllstandmessgeräten ebenfalls nicht erfasst werden können.

Die Erfassung einer Topologie einer Füllgutoberfläche kann insbesondere bei der Messung von Schüttgütern und den dabei oftmals auftretenden Schüttkegeln und Abzugstrichtern innerhalb oder außerhalb geschlossener Behälter vorteilhaft anwendbar sein. Auch bei bewegten Flüssigkeiten kann das Erfassen einer Oberflächentopologie zur Bestimmung von Füllständen und/oder Volumina anwendbar sein. Derartige bewegte Flüssigkeiten treten beispielsweise beim Einsatz von Rührvorrichtungen und den daraus erzeugten Strömungsbildern an der Flüssigkeitsoberfläche (sogenannte Tromben) auf. Eine Bestimmung der Oberflächentopologie kann Rückschlüsse auf weitere Größen, wie beispielsweise eine Viskosität oder eine Durchmischung eines Füllgutes, gegebenenfalls unter Berücksichtigung einer Geschwindigkeit der Rührvorrichtung, erlauben.

Verfahren zum berührungslosen Abtasten einer Oberfläche können beispielsweise auf dem Prinzip beruhen, dass ein in Richtung einer Oberfläche ausgesendetes Signal an dieser reflektiert wird und eine Laufzeit und/oder Signalstärke des reflektierten Signals ausgewertet wird. Um eine Topologie einer Füllgutoberfläche mit ausreichender Genauigkeit zu erfassen, kann es notwendig sein, eine Vielzahl von Messungen in Richtung bestimmter Bereiche einer Füllgutoberfläche auszuführen, was eine Komplexität sowie Kosten für derartige Messvorrichtungen oder Messverfahren erhöhen kann.

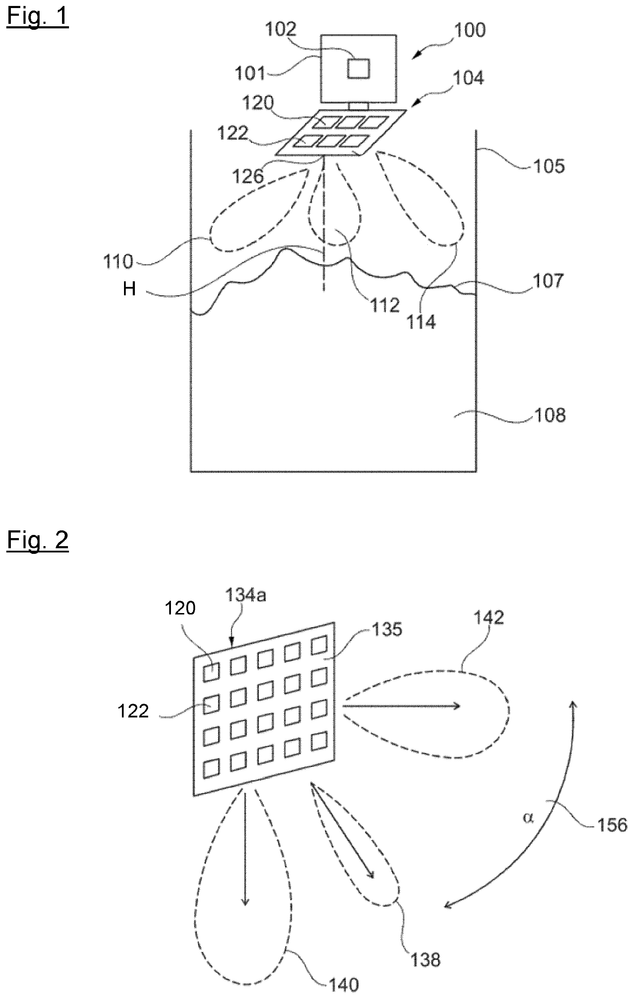

Figur 1 zeigt ein Ausführungsbeispiel eines topologieerfassenden Füllstandmessgeräts 100 gemäß dem Stand der Technik. Solche topologieerfassenden Füllstandmessgeräte 100 gewinnen in der Füllstandmesstechnik zunehmend an Bedeutung. Neben der Ausgabe eines gewöhnlichen Füllstands bei Schüttgütern, liefern diese Geräte zusätzliche Informationen über die Oberflächenkontur 107 einer Schütthalde 108. Außerdem können Anhaftungen an Behälterwänden detektiert werden. Bislang sind nur vereinzelt Systeme dieser Art auf dem Markt zu finden.

Das Füllstandmessgerät weist eine Steuereinheit 101 mit einem elektrischen Steuer-Schaltkreis 102 sowie eine Antenneneinrichtung 104, nachfolgend auch kurz Antenne 104, auf. Derartige Füllstandmessgeräte 100 werden insbesondere bei Schüttgutmessungen in einem Behälter 105 oder auf einer offenen Halde eingesetzt, wobei der Verlauf der Oberfläche 107 des Schüttguts 108 und/oder die Topologie der Füllgutoberfläche 107 des Füllgutes 108 ermittelt werden kann. Die Antenneneinrichtung 104 weist mehrere Sende- und/oder Empfangselementen 120, 122 auf, was eine Veränderung der Hauptstrahlrichtung H und/oder der Hauptempfangsrichtung H' ermöglicht. Damit können Echosignale und/oder Echokurven aus den unterschiedlichen Hauptstrahlrichtungen H und/oder Hauptempfangsrichtungen H' erfasst werden.

Die Antenne 104 weist eine zweidimensionale Anordnung von Sendeelementen 120 und/oder Empfangselementen 122 auf. Die für die Vermessung der Füllgutoberfläche 107 notwendige Strahlablenkung wird hier ausschließlich auf elektronischem Wege durch Verfahren zur analogen und/oder digitalen Strahlablenkung (Beamforming) erreicht. Dabei werden die Hauptstrahlrichtung H und/oder Hauptempfangsrichtung H' auf elektronischem Weg, d.h. ohne mechanisch Bewegung von Komponenten des Füllstandmessgerätes 100, verändert.

Das in Figur 1 gezeigte topologieerfassende Füllstandmessgerät 100 weist ein Mehrantennensystem (MIMO) auf, das ein elektronisches Verschwenken einer Hauptabstrahlrichtung H ohne mechanisch bewegte Teile ermöglicht. Dies trägt dem Umstand Rechnung, dass mechanisch geschwenkte Antennensysteme zwar technologisch einfach aufzubauen sind, jedoch eine sehr aufwändige und wartungsintensive Mechanik aufweisen. Die Antenne 104 wird dabei durch ein Mehrantennensystem (MIMO) aufgebaut, das eine Vielzahl von Sende- und Empfangselementen 120, 122 aufweist, die regelmäßig über eine Antennenfläche 126 verteilt angeordnet sind. Aus den möglichen Kombinationen von Sende- und Empfangselementen 120, 122 ergibt sich die Zahl der Kanäle, die das Mehrantennensystem aufweist. Weist das Mehrantennensystem bspw. drei Sendeelemente und vier Empfängerelemente auf, so besitzt das Gerät 12 Radarkanäle, die sich aus den jeweiligen Kombinationen der Sende- und Empfangselemente ergeben. Bspw. ist Kanal 1 gebildet durch die Kombination von Sendeelement 1 und Empfangselement 1, Kanal 2 durch die Kombination von Sendeelement 1 und Empfangselement 2, bis hin Kanal 12, der durch die Kombination von Sendeelement 3 und Empfangselement 4 gebildet ist.

Aktuelle Radarchips, die im Automobilsektor bspw. für das dort zum Einsatz kommende Abstandsradar entwickelt wurden, beinhalten bereits in der Regel drei Sendeelemente und vier Empfangselemente und weisen damit eine entsprechende Anzahl an Kanälen auf. Die im Automobilsektor eingesetzte Radartechnologie in Form von hochintegrierten Radarsystemen in einem Radarchip (RSoC, Radar System on Chip) führt zu einer Miniaturisierung und Kostenreduzierung der diesbezüglichen Elektronikkomponenten.

Bei einem MIMO System, wie es in Figur 1 dargestellt ist, kann durch eine in ihrer Phasenlage unterschiedliche Ansteuerung der Sendeelemente eine resultierende Sendekeule des Mehrantennensystems geschwenkt werden. Die resultierende Sendekeule und die damit verbundene Hauptabstrahlrichtung H resultiert aus einer Überlagerung der den einzelnen Sendeelementen zugeordneten Sendekeulen 110, 112, 114. Im Sendefall ändert sich damit je nach Phasenverschiebung der Signale der einzelnen Sendeelemente die Richtung der resultierenden Hauptstrahlrichtung H des Sendearrays.

Im Empfangsfall, in dem ebenfalls eine Vielzahl von Empfangselementen das reflektierte Sendesignal empfangen, kann die Hauptempfangsrichtung H' ebenfalls über eine einstellbare Phasenlage bestimmt werden. Werden die einzelnen Empfangselemente mit unterschiedlichen vorbestimmten Phasenlagen belegt, sprich, das jeweils empfangene Signal auf eine bestimmte vordefinierte Art verzögert, ändert dies die Hauptempfangsrichtung H' des Empfängerarrays.

Unter einem Array wird eine Vielzahl an Sende- / Empfangselementen verstanden, die in einem bestimmten, vordefinierten Abstand zueinander angeordnet sind.

Figur 2 zeigt eine vergrößerte Darstellung einer Antenne 135 mit einem Array 134a aus mehreren Sende- und/oder Empfangselementen 120, 122. Die Sende- und/oder die Empfangselemente 120, 122 sind dabei flächig und/oder gleichmäßig auf einer Antennenfläche 135 verteilt. Beispielsweise sind die Sende- und/oder die Empfangselemente 120, 122 in Reihen und Spalten auf der Antennenfläche 135 angeordnet. Ein Abstand zwischen zwei benachbarten Sende- und/oder Empfangselementen 120, 122 ist dabei kleiner oder gleich der halben Wellenlänge des Radarsignals. In Figur 2 sind symbolisch Sende- und/oder Empfangskeulen 138, 140, 142 einzelner Sende- und/oder Empfangselemente 120, 122. Unter Verwendung von Verfahren zur digitalen Strahlformung kann ein Ablenkwinkel 156 eingestellt werden . Der Ablenkwinkel ist dabei definiert als der Winkel der Hauptabstrahlrichtung H und/oder der Hauptempfangsrichtung H' einer Antenne in Bezug auf die Normale und/oder den Normalenvektor der zugehörigen Antennenfläche 135. Typische Werte reichen hier theoretisch von -60° bis +60°, sowohl für die Azimutal- als auch für die Elevationsrichtung. Real einzustellende Ablenkwinkel 156 liegen im Bereich von +/-45°, was mit den Verfahren zur analogen und/oder digitalen Strahlablenkung ohne allzu große Einbußen in Bezug auf die sich einstellende Halbwertsbreite der Antenne erreichbar ist.

Da der so erzielbare Ablenkwinkel 156 begrenzt ist und so bspw. Füllgutoberflächen in stark gefüllten Behältern nicht hinreichend erfasst werden können, kann das Füllstandmessgerät 100 ein Radar bzw. eine Antennenanordnung 130 bestehend aus mehreren für sich alleinstehenden Teilradargruppen in Form mehrerer Antennen aufweisen. Die Gesamtradarantenne kann dann etwa eine Pyramide oder ein Pyramidenstumpf sein, wobei auf jeder Teilmantelfläche bzw. Antennenfläche der Pyramide eine Teilradargruppe angeordnet sein kann und wobei mit jeder Teilradargruppe eine analoge und/oder digitale Strahlformung durchgeführt werden kann.

Durch eine solche Ausgestaltung mit mehreren Antennen wird erreicht, dass durch eine geeignete Ansteuerung und Auswertung ein vergrößerter Winkelbereich abgetastet werden kann.

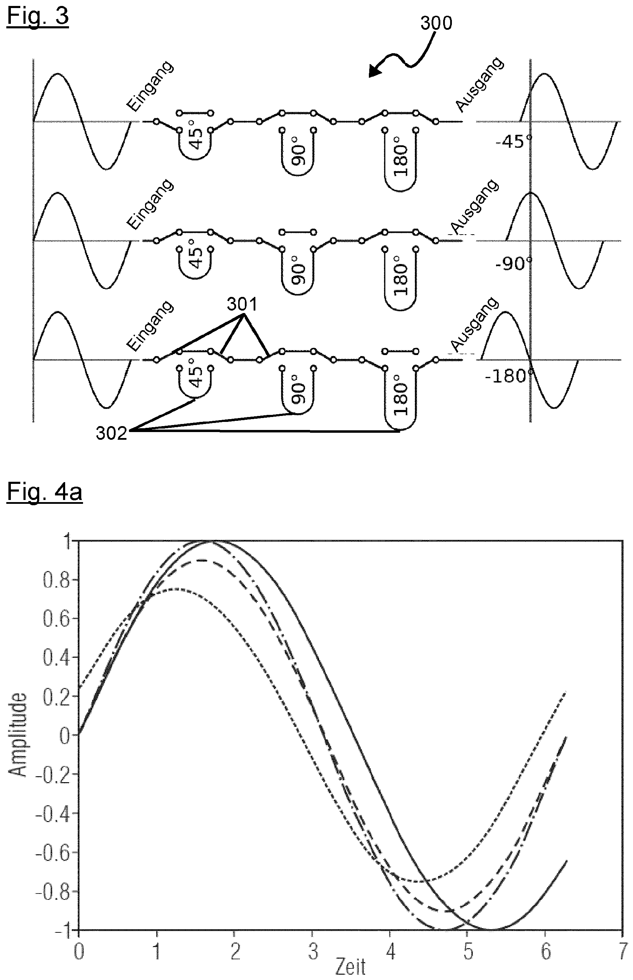

Eine Art die Phasen der einzelnen Sende- und Empfangskanäle zu variieren sind Hochfrequenz-Phasenschieber 300. Eine Prinzipskizze eines solchen Hochfrequenz-Phasenschiebers 300 ist in Figur 3 gezeigt. Bei diesem Hochfrequenz-Phasenschieber 300 wird das hochfrequente Sende- bzw. Empfangssignal über das Einbringen einer zusätzlichen Leitung 302 in den Signalpfad gegenüber einem anderen Kanal verzögert. Diese Leitungen 302 werden über Schalter 301, die als PIN Dioden ausgeführt sein können, hinzu- oder weggeschaltet. Auf diese Weise lässt sich eine diskrete Verzögerung einstellen. Da von periodischen Sinussignalen ausgegangen wird, ist es nur sinnvoll das Signal um maximal 360° zu verzögern. Realistische Abstufungen der Verzögerungswerte, liegen zwischen 2 und 180°.

In Figur 3 sind beispielhaft drei parallele Signalstrecken dargestellt, in denen unterschiedliche Leitungen 302 in den Signalpfad geschaltet sind. Die symbolisch dargestellten Verzögerungselemente für 45°, 90° und 180° können beliebige (vorbestimmte und sinnvolle) andere Werte aufweisen und zur feineren Einstellung der Phasenverschiebung deutlich geringere Werte aufweisen. Zusätzlich können in einem Signalpfad mehrere Verzögerungselemente kombiniert werden.

Eine weitere, jedoch ungebräuchliche Art die Phasen im Sendefall zu variieren ist, eine Phasenverschiebung bereits bei der Signalerzeugung zu implementieren. Werden die Signale pro Sender aus separaten, miteinander synchronisierten Phasenregelschleifen (PLL) erzeugt, so können ebenfalls einstellbare Phasenverschiebungen zwischen den einzelnen PLLs implementiert werden.

Eine weitere, sehr gebräuchliche Art die Phasen im Empfangsfall zu variieren ist es nicht wie oben beschrieben, einen Phasenschieber im Hochfrequenzpfad einzubauen, sondern die Phasenverschiebung im digitalisierten, niederfrequenten Zwischenfrequenzbereich auf die Empfangssignale anzuwenden. Diese Technik ist unter dem Begriff digitaler Strahlformung bekannt.

Ein Problem, das bei der Mehrkanaltechnik (MIMO) auftritt ist, dass die Kanäle, d.h. die oben beschriebenen Kombinationen aus Sende- und Empfangselementen, leicht voneinander abweichende Phasen-, Frequenz- und Amplitudenwerte aufweisen.

Im Vergleich zu einem mechanisch geschwenkten topologieerfassenden Radargerät entsteht in einem mehrkanaligen Radargerät 100 jedoch folgendes Problem.

In einem Ein-Ziel-Szenario mit einem FMCW Radar (frequency modulated continous wave radar), generiert jeder Kanal als Ausgangssignal eine Sinusschwingung. Die Phase und die Frequenz der Sinusschwingung sind proportional zum Abstand des Ziels, die Amplitude ist ein Maß für die Reflexionseigenschaften des Ziels.

Aufgrund verschiedener Einflüsse, wie beispielsweise leicht unterschiedlichen Leitungslängen und/oder unterschiedlicher Leitungsdämpfung, unterschiedlichen kapazitive und/oder induktiven Einflüssen bei beispielsweise Lötverbindungen, Fertigungstoleranzen in den Chips, auf der Leiterplatte und/oder in den Antennen, kommt es zu variierenden Phasen- und Amplitudenverhältnissen der Kanäle und damit zu Abweichungen zwischen den Kanälen, die aus theoretischen Betrachtungen nicht existent sein sollten.

In Figur 4a sind beispielhaft die Ausgangssignale verschiedener Sendeelemente dargestellt. Wie der Darstellung in Figur 4a zu entnehmen ist, weisen die Signale voneinander abweichende Amplituden auf und sind untereinander phasenverschoben.

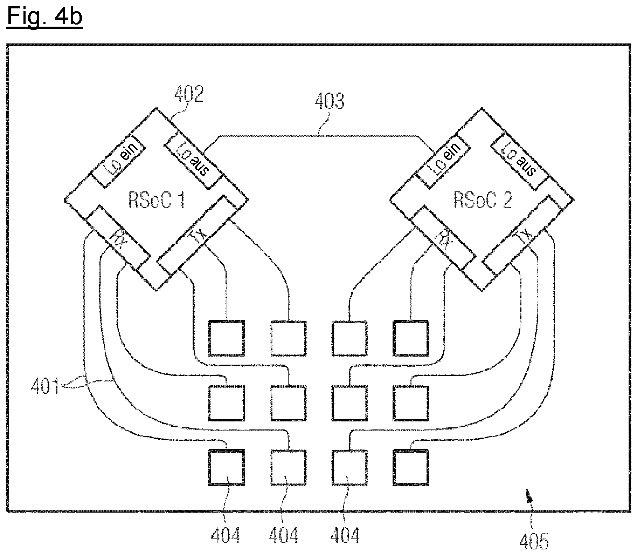

Aus konstruktiver Sicht können möglicherweise nicht alle Kanäle mit exakt gleichen Leitungslängen aufgebaut werden. Dieses Problem ist in Figur 4b dargestellt. Figur 4b zeigt ein Ausführungsbeispiel eines Radarfüllstandmessgeräts, bei dem zwei integrierte Radarsysteme (RSoC) 402 mit einer gemeinsamen Antenne betrieben werden. Durch die unterschiedlichen Längen der Leitungen 401 zwischen den Signalaus- und -eingängen Tx, RX der integrierten Radarsysteme (RSoc) 402 und den Sende- und/oder Empfangselementen 404 der gemeinsamen Antenne, entsteht ebenfalls eine Phasenverschiebung zwischen den einzelnen Kanälen. Dieses Problem verschlimmert sich, wenn mehrere integrierte Radarsysteme (RSoC) 402 auf einer gemeinsamen Platine 405 verwendet werden. Die zwei integrierten Radarsysteme (RSoC) 402 in Figur 4b sind über einen Lokaloszillator LO und eine zugehörige Leitung 403 miteinander verbunden und synchronisiert.

Wie aus Figur 4b ersichtlich ist, sind unterschiedlich lange Hochfrequenzleitungen 401 notwendig um die integrierten Radarsysteme (RSoC) 402 untereinander und mit den Sende- und Empfangselementen 404 zu verbinden. Dies führt wiederum zu weiteren Amplituden-, Frequenz-, und Phasenverschiebungen respektive Signallaufzeiten der einzelnen Kanäle.

Aus den oben genannten Gründen ist eine Kalibrierung eines MIMO Radarsystems notwendig. Dabei werden unterschiedliche Signallaufzeiten und Amplitudenschwankungen herauskalibriert, d.h. die Eingangssignale und die Ausgangssignalverarbeitung so angepasst, dass die o.g. Abweichungen kompensiert werden.

Hierfür wird ein Ein-Ziel-Szenario nachgestellt, in dem alle Kanäle vermessen werden. Die daraus resultierenden Sinussignale werden analysiert und es werden die Abweichungen hinsichtlich Amplitude, Phase und Frequenz zu einem Referenzsignal berechnet. Diese Abweichungen werden in Form von Koeffizienten bestimmt und abgespeichert. Das Referenzsignal kann beispielsweise das gemessene Signal von Kanal 1 sein. Kanal 2 hat dann beispielsweise eine um 0,2 dB höhere Amplitude, eine Frequenzabweichung von 20 Hz und eine Phasenabweichung von 30°.

Diese Abweichungen, die die Kalibrierdaten darstellen, werden dann bei Messungen in realer Umgebung berücksichtigt. Je nach Strahlformungsprinzip können sie unterschiedlich in die Messung miteinbezogen werden.

Bei der analogen Strahlformung mit Phasenschiebern können die Phasenschieber so eingestellt werden, dass sie die fehlerhaften Laufzeiten kompensieren. Zusätzlich werden einstellbare Sende- bzw. Empfangsverstärker eingesetzt, die die Abweichungen in Bezug auf die Amplitude korrigieren. Diese Art der Kompensation ist jedoch mit zusätzlichem Hardwareaufwand verbunden. Außerdem können die Fehler nur sehr ungenau aus den Systemen herauskalibriert werden, da sich beispielsweise Phasenschieber nicht beliebig fein einstellen lassen, da sie mit diskreten Schaltstufen arbeiten.

Enorme Vorteile hingegen bietet die empfängerseitige digitale Strahlformung. Hier können Kalibrierdaten sehr komfortabel berücksichtigt werden. Außerdem lassen sich die Kalibrierdaten mit einer viel größeren Genauigkeit abspeichern und verarbeiten. Während bei analogen Phasenschiebern meist nur eine Genauigkeit von 5 bis 8 bit realisierbar ist, können in der Digitaltechnik ohne größeren Aufwand 16 oder 32 bit realisiert werden.

Bei den so kalibrierten Mehrkanal Radarsystemen besteht aber weiterhin das Problem, dass sowohl Umwelteinflüsse als auch die Messentfernung Messungenauigkeiten auslösen. Es besteht daher Bedarf an topologieerfassenden Radarsystemen mit einer erhöhten Messgenauigkeit.

Es ist die Aufgabe der vorliegenden Erfindung ein topologieerfassendes Radarfüllstandmessgerät zur Verfügung zu stellen, das eine erhöhte Messgenauigkeit aufweist. Ferner ist es eine Aufgabe, ein Verfahren zum Kalibrieren eines topologieerfassenden Radarfüllstandmessgeräts, sowie ein Verfahren zum Betreiben eines solchen Radarfüllstandmessgeräts anzugeben.

Diese Aufgaben werden durch ein topologieerfassendes Füllstandmessgerät mit den Merkmalen des Patentanspruchs 1, ein Verfahren zum Kalibrieren eines topologieerfassenden Radarfüllstandmessgeräts gemäß Patentanspruch 8 sowie ein Verfahren zum Betreiben eines topologieerfassenden Radarfüllstandmessgeräts mit den Merkmalen des Patentanspruchs 10 gelöst. Patentanspruch 15 gibt einen Computerprogrammcode an, der das Verfahren softwaremäßig umsetzt.

Bevorzugte Ausführungsformen, Merkmale und Eigenschaften des vorschlagsgemäßen Feldgeräts entsprechen denjenigen des vorschlagsgemäßen Verfahrens und umgekehrt.

Vorteilhafte Ausgestaltungen und Varianten der Erfindung ergeben sich aus den Unteransprüchen und der nachfolgenden Beschreibung. Die in den Unteransprüchen einzeln aufgeführten Merkmale können in beliebiger, technisch sinnvoller Weise miteinander als auch mit den in der nachfolgenden Beschreibung näher erläuterten Merkmale kombiniert werden und andere vorteilhafte Ausführungsvarianten der Erfindung darstellen.

Ein erfindungsgemäßes topologieerfassendes Radarfüllstandmessgerät zum Bestimmen eines Füllstandes und einer Topologie eines Füllgutes mit einer Radareinheit einer Antenne mit wenigstens einem Sendeelement und wenigstens zwei Empfangselementen, mit einer Steuereinheit und einem Speicher, zeichnet sich dadurch aus, dass in dem Speicher wenigstens zwei unterschiedliche Sätze an Kalibrierdaten abgespeichert sind.

Dadurch, dass in dem Speicher wenigstens zwei unterschiedliche Sätze an Kalibrierdaten hinterlegt sind, ist es möglich das Radarfüllstandmessgerät auf unterschiedliche Umgebungsbedingungen zu kalibrieren. Kalibrieren bedeutet in diesem Sinne, dass durch die Umgebungsbedingungen verursachte Fehler in der Ansteuerung und/oder Signalauswertung durch geeignete Kalibrierkoeffizienten bei den Sendesignalen und/oder Empfangssignalen kompensiert werden. Die unterschiedlichen Sätze an Kalibrierdaten ermöglichen es durch eine geeignete Auswahl, das Radarfüllstandmessgerät auf unterschiedliche Umgebungsbedingungen einzustellen und so für diese Umgebungseigenschaften angepasst kompensierte Signale zu verwenden und/oder eine entsprechend angepasste Signalverarbeitung zu verwenden.

Umgebungsbedingungen in diesem Sinne sind alle äußeren Einflüsse, die eine Auswirkung auf die Füllstandmessung und/oder die Topologieerfassung haben. Dies sind beispielsweise und nicht abschließend eine Temperatur in der Prozessumgebung und/oder eine Temperatur der Antenne und/oder eine Temperatur der Elektronik und/oder eine Temperatur in der Umgebung des Füllstandmessgeräts außerhalb der Prozessumgebung und/oder ein Abstand des Füllguts von der Antenne und/oder eine Einbaulage des Füllstandmessgeräts und/oder eine Luftfeuchtigkeit in der Prozessumgebung, der Elektronik oder außerhalb in der Umgebung des Füllstandmessgeräts.

Unterschiedliche Sätze an Kalibrierdaten sind Sätze von Kalibrierdaten, die zu unterschiedlichen Umgebungsbedingungen ermittelt wurden. Durch wenigstens zwei Sätze an Kalibrierdaten können unterschiedliche Bereiche der einzelnen Umgebungsbedingungen und Kombinationen aus den verschiedenen Umgebungsbedingungen jeweils mit einem eigenen Satz an Kalibrierdaten berücksichtig werden. Auf diese Weise kann die Messung optimiert und das Messergebnis verbessert werden.

Im einfachsten Fall kann der Nutzer bei weitestgehend konstanten und bekannten Umgebungsbedingungen den am besten passenden Satz von Kalibrierdaten bei der Inbetriebnahme des topologieerfassenden Radarfüllstandmessgeräts auswählen und so die Messung auf die jeweiligen Umgebungsbedingungen anpassen.

Wie oben bereits beschrieben kann die Antenne auch aus mehreren Teilantennen bestehen, bspw. um durch eine geschickte Anordnung der Teilantennen relativ zueinander mit der Gesamtantenne, also mit der Kombination der Teilantennen, einen größeren Winkelbereich als Erfassungsbereich abzudecken.

Bevorzugterweise handelt es dich bei dem topologieerfassenden Füllstandmessgerät um ein Radarfüllstandmessgerät, bei dem eine Veränderung der Hauptabstrahlrichtung ausschließlich auf elektronischem Wege erfolgt, insbesondere durch eine digitale und/oder analoge Strahlformung und optional die Verwendung mehrerer Antennen und eine geeignete Verschaltung derselben.

Um eine automatisierte Umschaltung zwischen den verschiedenen Sätzen von Kalibrierdaten zu ermöglichen, kann das Radarfüllstandmessgerät geeignet ausgebildet sein, wenigstens einen weiteren Messwert zusätzlich zu Füllstand und Topologie zu bestimmen. Der eine oder die mehreren Messwerte können bspw. ausgewählt sein aus der Gruppe von Temperatur, Luftfeuchtigkeit, Entfernung, Lage und weiteren relevanten Messwerten für Umgebungsbedingungen oder damit verknüpften Größen. Die weitern Messwerte können mittels des Radarsensors selbst, mittels in Komponenten des Radarsensors oder in der Elektronik integrierten Mitteln bestimmt werden. Die integrierten Mittel müssen nicht zwingend separate Sensoren sein, sondern können jedwede Mittel umfassen, die eine Bestimmung einer relevanten Umgebungsbedingung oder einer damit verknüpften Größe ermöglichen.

Insbesondere die Temperatur der einzelnen Komponenten kann einen Einfluss auf die Qualität der Messung haben, da durch thermische Ausdehnungseffekte bspw. die Leitungslängen zur Verbindung der Sende- und/oder Empfangselemente mit einer Radareinheit, in der die Signalerzeugung stattfindet, variieren kann. Hierdurch entsteht bei der Ansteuerung der einzelnen Sendeelemente eine temperaturabhängige Phasenverschiebung. Genauso entsteht bei der Signalübertragung der Empfangssignale von den Empfangselementen zur Auswertung bspw. in der Hochfrequenzeinheit eine Phasenverschiebung zwischen den einzelnen Signalen.

Ferner können sich die Kalibrierdatensätze für unterschiedliche Abstandsbereiche unterscheiden.

Des Weiteren können die Kalibrierdatensätze auch von der Einbaulage des Radarfüllstandmessgeräts abhängig sein. Ist ein Radarfüllstandmessgerät bspw. nicht exakt lotrecht eingebaut, so kann es notwendig sein, die Senkrecht-Richtung durch eine geeignete Auswahl der Kalibrierdaten anzupassen.

Auf diese Weise kann ein für die Messung von Füllstand und Topologie eingesetzter Satz an Kalibrierdaten abhängig von dem oder den weiteren Messwerten ausgewählt sein. Das ermöglicht für jede einzelne Messung den an die Umgebungsbedingungen angepassten optimalen Satz an Kalibrierdaten auszuwählen.

Das Radarfüllstandmessgerät weist hierfür wenigstens einen zusätzlichen Sensor auf. Insbesondere kann das Radarfüllstandmessgerät mehrere, insbesondere zwei, drei, vier, fünf oder mehr zusätzliche Sensoren aufweisen. Mittels der zusätzlichen Sensoren können die jeweiligen Umgebungsbedingungen oder damit verknüpfte Größen bestimmt und für die Auswahl eines Satzes an Kalibrierdaten verwendet werden.

Wenigstens einer der zusätzlichen Sensoren des Radarmessgeräts kann ein Temperatursensor sein. Das Radarmessgerät kann ferner mehrere Temperatursensoren aufweisen, um eine redundante Messung zu ermöglichen, und/oder mehrere Temperaturen an unterschiedlichen Stellen des Radarsensors zu ermitteln, bspw. um eine Temperaturdifferenz zwischen zwei oder mehreren Stellen des Radarsensors zu ermitteln.

Beispielsweise kann ein Temperatursensor derart angeordnet sein, dass eine Temperatur der Antenne und/oder der Prozessumgebung ermittelbar ist. Der Temperatursensor kann dabei insbesondere in einem Bereich der Antenne oder des Gehäuses so angeordnet sein, dass eine Temperatur der Antenne und/oder der Prozessumgebung ermittelbar ist, d.h. der Sensor kann insbesondere an oder in der Antenne sitzen.

Zusätzlich oder alternativ kann ein Temperatursensor im Bereich einer Elektronik angeordnet sein, d.h. insbesondere an oder in der Elektronik derart angeordnet sein, dass eine Temperatur der Elektronikkomponenten des Radarfüllstandmessgeräts ermittelbar ist.

Zusätzlich oder alternativ kann ein Temperatursensor derart angeordnet sein, dass eine Umgebungstemperatur des Radarfüllstandmessgeräts ermittelbar ist, insbesondere eine Temperatur außerhalb eines Gehäuses des Radarfüllstandmessgeräts außerhalb der Prozessumgebung.

Gemäß der Erfindung weist das Radarmessgerät als zusätzlichen Sensor wenigstens einen Abstandssensor zur Ermittlung eines Abstandes des Füllgutes von der Antenne auf. Durch wenigstens einen dedizierten Abstandssensor wird eine Abstandsmessung unabhängig von dem Radarfüllstandmessgerät. Der Abstandssensor kann bspw. als weiterer Radarsensor und/oder als Ultraschallsensor und/oder als optischer Abstandssensor ausgebildet sein. Durch eine Abstandsmessung unabhängig von dem Radarmessgerät wird eine Auswahl eines Satzes von Kalibrierdaten abhängig von einem Abstand der Füllgutoberfläche von bspw. der Antenne des Radarfüllstandmessgeräts möglich, die durch den alternativen Sensor unabhängig von einer möglichen Messungenauigkeit aufgrund des Abstandes ist. Der zusätzliche Abstandssensor kann bspw. in oder neben der Antenne angeordnet sein.

Ferner kann das Radarmessgerät zusätzlich oder alternativ einen Lagesensor als zusätzlichen Sensor aufweisen. Durch den Lagesensor kann bspw. eine Abweichung der Einbauposition des Radarfüllstandmessgeräts von einer Position, in der die Flächennormale der Antenne senkrecht ausgerichtet ist, ermittelt und eine Ausrichtung der Hauptabstrahlrichtung entsprechend der ermittelten Abweichung durch Kalibrierfaktoren korrigiert werden.

Bei einer Ausgestaltung mit mehreren Teilantennen kann - je nach Aufbau der Antenne - bspw. die Symmetrieachse der Teilantennen als Referenzachse für die Bestimmung einer Ausrichtung der Antenne verwendet und entsprechend einer Abweichung dieser Achse von der Senkrechten, eine Korrektur durch entsprechende Kalibrierfaktoren vorgenommen werden. Zusätzlich der alternativ kann das Radarmessgerät einen Feuchtigkeitssensor beispielsweise einem Hydrometer aufweisen.

Ein erfindungsgemäßes Verfahren zum Kalibrieren eines topologieerfassenden Radarfüllstandmessgeräts zum Bestimmen eines Füllstandes und einer Topologie eines Füllgutes mit einer Radareinheit einer Antenne mit wenigstens einem Sendeelement und wenigstens zwei Empfangselementen, mit einer Steuereinheit und einem Speicher zeichnet sich dadurch aus, dass bei einer Kalibrierung des Radarfüllstandmessgeräts wenigstens zwei unterschiedliche Sätze an Kalibrierdaten ermittelt und in dem Speicher abgespeichert werden.

Durch eine Ermittlung von wenigstens zwei unterschiedlichen Sätzen an Kalibrierdaten wird die Möglichkeit eröffnet, dass das topologieerfassende Radarfüllstandmessgerät bei unterschiedlichen Umgebungsbedingungen kalibriert wird. Durch eine Auswahl des entsprechenden Satzes an Kalibrierdaten wird ein optimierter Betrieb des Radarfüllstandmessgeräts bei unterschiedlichen Umgebungsbedingungen ermöglicht.

Unterschiedliche Sätze an Kalibrierdaten sind nicht zwangsläufig unterschiedlich in den abgespeicherten Kalibrierfaktoren, sondern können sich auch lediglich in den zugrundeliegenden Umgebungsbedingungen unterscheiden.

Die wenigstens zwei unterschiedlichen Sätze an Kalibrierdaten werden abhängig von einem Abstand und vorzugsweise abhängig von einer Temperatur und/oder einer Luftfeuchtigkeit und/oder von einer Lage des Sensors ermittelt. Dabei können für jede Umgebungsbedingung, d.h. insbesondere Temperatur, Lage und Abstand, verschiedene Bereiche definiert werden, in denen eine Änderung der jeweiligen Umgebungsbedingung keinen oder nur einen vernachlässigbaren Einfluss auf die Kalibrierungsfaktoren hat. Ferner können für sämtliche Kombinationen der als relevant befundenen Umgebungsbedingungen bzw. Kombinationen der jeweiligen Bereiche der Umgebungsbedingungen eigene Sätze von Kalibrierdaten ermittelt und abgespeichert werden.

Ein erfindungsgemäßes Verfahren zum Betreiben eines topologieerfassenden Radarfüllstandmessgeräts zum Bestimmen eines Füllstandes und einer Topologie eines Füllgutes mit einer Radareinheit einer Antenne mit wenigstens einem Sendeelement und wenigstens zwei Empfangselementen, mit einer Steuereinheit und einem Speicher mit wenigstens zwei Sätzen an Kalibrierdaten zeichnete sich dadurch aus, dass einer von wenigstens zwei Sätzen an Kalibrierdaten auswählbar ist.

Durch die Wählbarkeit eines von wenigstens zwei Sätzen von Kalibrierdaten kann eine Kalibrierung des Radarfüllstandmessgeräts für unterschiedliche Kalibrierungsbedingungen, d.h. die Umgebungsbedingungen, unter denen die Kalibrierung erfolgte, erfolgen. Es ist damit möglich das Radarfüllstandmessgerät für unterschiedliche Umgebungsbedingungen zu kalibrieren und so die Messung zu optimieren.

Die Kalibrierung erfolgt in der Regel werksseitig. Die unterschiedlichen Kalibrierdatensätze werden im Gerät abgespeichert und in einer genau definierten Messumgebung aufgenommen.

Der Satz von Kalibrierdaten kann dabei nutzerseitig auswählbar sein. Ist es z.B. in einem einfachen Szenario bekannt, in welchem Temperaturbereich ein Radarfüllstandmessgerät betrieben werden wird, so kann bei der Inbetriebnahme ein Satz an Kalibrierdaten ausgewählt und fortan für die Messung verwendet werden.

Gemäß der Erfindung wird der Satz von Kalibrierdaten abhängig von Umgebungsbedingungen des Radarfüllstandmessgeräts ausgewählt. Hierunter ist zu verstehen, dass abhängig von den Umgebungsbedingungen eine automatisierte Auswahl des Satzes von Kalibrierdaten erfolgt. Es kann damit im Vergleich zu einer manuellen Auswahl eine automatisierte Auswahl erfolgen, die während des Messbetriebs zwischen zwei Messungen aktualisiert werden kann.

Der Satz von Kalibrierdaten wird abhängig von einem Abstand und vorzugsweise abhängig von einer Temperatur und/oder einer Luftfeuchtigkeit und/oder einer Lage ausgewählt.

Eine Häufigkeit der Auswahl des Satzes von Kalibrierdaten ist vorzugsweise abhängig von einer Änderungsgeschwindigkeit der Umgebungsbedingungen und einer Messfrequenz ausgestaltet. Sind z.B. unterschiedliche Sätze von Kalibrierdaten für unterschiedliche Temperaturbereiche verfügbar, wobei ein Temperaturbereich 20° umfasst und ändert sich eine Temperatur sehr langsam, bspw. mit einer max. Geschwindigkeit von 10° pro Stunde, so ist es bei einer Messfrequenz von einer Messung pro Minute nicht notwendig, die Auswahl der Kalibrierdaten vor jeder Messung zu überprüfen, sondern es kann ausreichen, eine Überprüfung und Auswahl der Kalibrierdaten jede zehnte Messung vorzusehen. Alternativ kann es bei sich schnell ändernden Umgebungsbedingungen und/oder eine im Vergleich dazu niedrigen Messfrequenz notwendig sein, vor jeder Messung die Auswahl der korrekten Kalibrierdaten zu überprüfen.

Sofern dies mit den verfügbaren Ressourcen, insbesondere der verfügbaren Energie und/oder der verfügbaren Rechenleistung möglich ist, so ist es zu bevorzugen, den Satz von Kalibrierdaten vor jeder Messung abhängig von den jeweils aktuellen Umgebungsbedingungen auszuwählen.

Die vorliegende Erfindung wird nachfolgend anhand von Ausführungsbeispielen unter Bezugnahme auf die beigefügten Figuren eingehend erläutert. Es zeigen:
- Figur 1: ein Ausführungsbeispiel eines topologieerfassenden Radarfüllstandmessgeräts gemäß dem Stand der Technik (schon behandelt),
- Figur 2: eine vergrößerte Darstellung einer Antenneneinrichtung, wie sie in dem Ausführungsbeispiel gemäß Figur 1 zum Einsatz kommen kann (schon behandelt),
- Figur 3: eine Prinzipskizze eines analogen Phasenschiebers (schon behandelt),
- Figur 4a: Sendesignale, wie sie in dem Ausführungsbeispiel gemäß Figur 1 ohne Kalibrierung, zum Einsatz kommen (schon behandelt),
- Figur 4b: ein Ausführungsbeispiel mit zwei integrierten Radarsystemen mit einer gemeinsamen Antenne (schon behandelt),
- Figur 5: ein Ausführungsbeispiel eines topologieerfassenden Radarfüllstandmessgeräts und
- Figur 6: ein Ausführungsbeispiel eines Radarfüllstandmessgeräts gemäß der vorliegenden Anmeldung

In den Figuren bezeichnen - soweit nicht anders angegeben - gleiche Bezugszeichen gleiche oder einander entsprechende Komponenten mit gleicher Funktion.

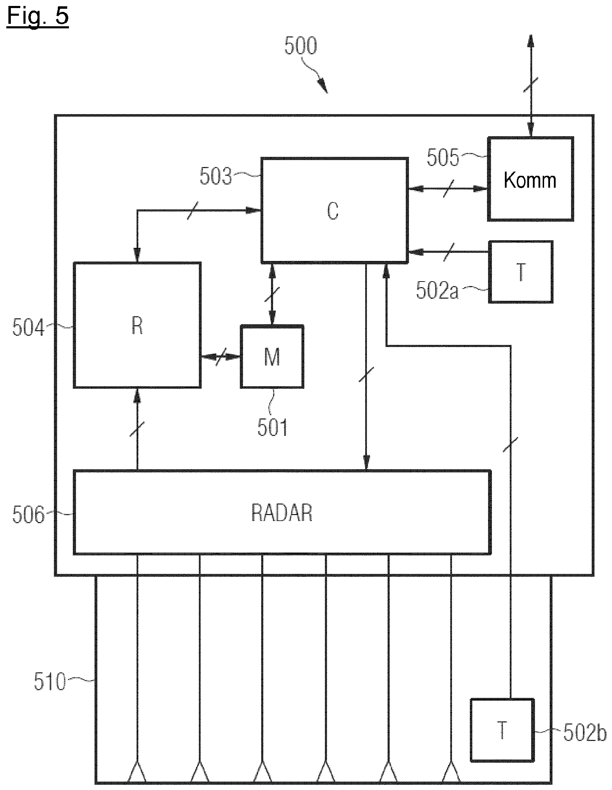

Figur 5 zeigt ein Blockschaltbild eines Ausführungsbeispiels eines topologieerfassenden Radarfüllstandmessgeräts 500.

Das topologieerfassenden Radarfüllstandmessgeräts 500 weist eine Antenne 510 auf, die von einem integrierten Radarsystem (RSoC) 506 gespeist wird und Empfangssignale an dieses integrierte Radarsystem (RSoC) 506 übermittelt. Die Antenne 510 ist aus einer in einem Array angeordneten Anzahl von Sende- und/oder Empfangselementen gebildet.

Das integrierte Radarsystem 506 wird von einer als Controller ausgebildeten Steuereinheit 503 angesteuert. Die Empfangssignale werden von einer Recheneinheit 504, die als FPGA realisiert sein kann, verarbeitet. Neben der Radareinheit 506, die zwischen 2 und über 1000 Radarkanälen beinhalten kann, ist die Recheneinheit 504 dafür zuständig die zu Empfangsdaten digitalisierten Empfangssignale der einzelnen Radarkanäle entgegenzunehmen und diverse lineare Rechenoperatoren auf die Messdaten anzuwenden. Die Recheneinheit 504 kann über ein FPGA (Field Programmable Gate Array) realisiert werden. Die linearen Rechenoperatoren beinhalten die Kalibrierung des Feldgeräts in Empfangsrichtung, mehrdimensionale Fensterungen und mehrdimensionale FFTs (Fast Fourier Transformation). Ebenfalls können weitere Filterungen und eine Datenreduktion darin prozessiert werden.

Sowohl die Steuereinheit 503 als auch die Recheneinheit 504 sind mit einem Speicher M verbunden, in dem eine Mehrzahl an Sätzen von Kalibrierdaten für verschiedene Umgebungsbedingungen abgespeichert sind.

Das topologieerfassende Radarfüllstandmessgerät 500 ist dazu ausgelegt die Kalibrierdaten während des Betriebs dynamisch an die Umgebungsbedingungen anzupassen, d.h. abhängig von den jeweils bestehenden Umgebungsbedingungen den passenden Satz an Kalibrierdaten auszuwählen. Das Radarfüllstandmessgerät besitzt also nicht nur einen Kalibrierdatensatz, sondern mehrere und weist hierfür eine Speichereinheit 501 auf, die in ausreichender Größe dimensioniert ist. Die Kalibrierdatensätze sind auf verschiedene Umgebungsbedingungen abgestimmt.

Das Radarfüllstandmessgerät weist dazu weitere Sensoren, die Umgebungseigenschaften messen, die Einfluss auf die Messgenauigkeit haben

In dem in Figur 5 gezeigten Ausführungsbeispiel weist das Radarfüllstandmessgerät mehrere Temperaturfühler 502a, 502b auf, von denen der eine Temperaturfühler 502a in der Elektronik und der andere Temperaturfühler 502b im Bereich der Antenne 510 angeordnet ist. Damit kann die die Temperatur der Elektronik und deren Umgebung sowie der Antenne 510 und deren Umgebung überwacht werden. Die Steuereinheit 503 kann die Temperaturen auslesen und gibt der Recheneinheit 504, die für die Berechnung der Schüttgutoberfläche auf Basis der Empfangsdaten zuständig ist, vor, welche Kalibrierdaten verwendet werden sollen.

Die Steuereinheit 503 kann selbst für die Ansteuerung des Radarsystems 506 ebenfalls den passenden Satz an Kalibrierdaten verwenden.

Beispielsweise können drei verschiedene Sätze an Kalibrierdaten für die Prozesstemperaturbereiche zwischen -40°C - 0°C, 0°C - 50°C und 50°C - 100°C vorhanden sein. Entsprechend der Prozesstemperatur wählt die Steuereinheit 503 den entsprechenden Datensatz aus.

Eine Kommunikation mit einer übergeordneten Einheit, bspw. einer Leitwarte kann über ein Kommunikationsmodul 505 erfolgen.

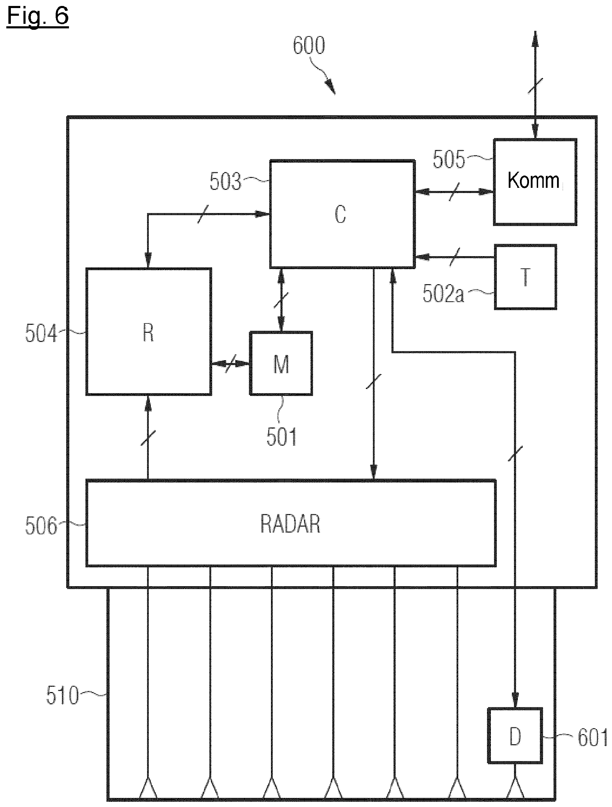

Ein Ausführungsbeispiel gemäß der Erfindung ist in Figur 6 gezeigt.

Das dort offenbarte Radarfüllstandmessgerät 500 weist abstandsabhängige Kalibrierdaten auf. In Abhängigkeit eines Abstandes des Füllguts, d.h. insbesondere in Abhängigkeit des Füllstands kann die Steuereinheit 503 auswählen welcher Kalibrierdatensatz verwendet werden soll. Der Abstand, respektive Füllstand kann entweder über einen bspw. als zusätzliches integriertes Füllstandmessgerät ausgebildeten Abstandssensor 601 oder alternativ aus den Daten des topologieerfassenden Radarsystems ermittelt werden. Zur Erhöhung der Messsicherheit ist auch eine Kombination aus beiden Systemen denkbar. der Abstandssensor 601 kann dabei beispielsweise auf einem akustischen, optischen oder radarbasierten Messverfahren basieren.

Ferner kann auch eine Kombination aus Temperatur und Abstand zur Ermittlung des passenden Satzes an Kalibrierdaten verwendet werden - dementsprechend sind die Kalibrierdaten bei der Kalibrierung des Radarfüllstandmessgeräts in dem Speicher 501 abzuspeichern.

Es ist dabei denkbar, dass vor jeder topologieerfassenden Messung die Umgebungsparameter mittels der zusätzlichen Umgebungssensoren 501a, 502b, 601 bestimmt werden. Daraufhin entscheidet die Steuereinheit welcher Kalibrierdatensatz für die folgende Messung verwendet werden soll. Auch ist denkbar, dass die Umgebungssensoren nicht vor jeder Messung ausgelesen werden, da es sich teilweise um langsame Prozesse handelt, und die Messrate der Topologieerfassung in Relation dazu deutlich höher ist. Beispielsweise kann die Messrate zur Topologieerfassung 5 Messungen pro Minute betragen, wohingegen eine Temperaturänderung um 20°C mehrere Stunden benötigen kann. In diesem Fall wäre es ausreichend, wenn die Temperaturmessung bspw. nur alle 20 Messungen erfolgt.

In einer weiteren Variante können die Kalibrierdaten, die zur Topologieerfassung verwendet werden sollen, auch von einem Benutzer vorgegeben werden. Der zu verwendende Satz an Kalibrierdaten kann dafür bspw. über die Kommunikationsschnittstelle 505 ausgewählt werden. Ebenso ist es denkbar, dass ein Benutzer über die Kommunikationsschnittstelle 505 komplett neue Kalibrierparameter einspielen kann. Über diese Kommunikationsschnittstelle 505 können auch die Messwerte an das Prozessleitsystem übertragen werden.

### Bezugszeichenliste

- 100: Topologieerfassendes Füllstandmessgerät
- 101: Steuereinheit
- 102: Elektrischer Steuer-Schaltkreis
- 104: Antenneneinrichtung (kurz: Antenne)
- 105: Behälter

- 107: Oberflächenkontur
- 108: Schütthalde

- 110, 112, 114: Sendekeulen

- 120: Sendeelement
- 122: Empfängerelement
- 126: Antennenfläche

- 130: Radar bzw. Antennenanordnung
- 135: Antennen
- 134a: Array
- 138: Sende- und/oder Empfangskeule
- 140: Sende- und/oder Empfangskeule
- 142: Sende- und/oder Empfangskeule

- 156: Ablenkwinkel

- 300: Hochfrequenz-Phasenschieber
- 301: Schalter
- 302: Leitung

- 401: Leitungen
- 402: Radareinheit, Integriertes Radarsystem (RSoC)
- 403: Leitung
- 404: Sende- und Empfangselemente
- 405: Platine
- 500: Topologieerfassendes Radarfüllstandmessgerät
- 501: Speichereinheit
- 501a: Umgebungssensor
- 502a, 502b: Temperaturfühler
- 503: Steuereinheit
- 504: Recheneinheit
- 505: Kommunikationsmodul
- 506: Radareinheit, Integriertes Radarsystem (RSoC)
- 510: Antenne

- 601: Abstandssensor

## Patentansprüche

1. Topologieerfassendes Radarfüllstandmessgerät (500) zum Bestimmen eines Füllstandes und einer Topologie eines Füllgutes mit einer Radareinheit (506), einer Antenne (510) mit wenigstens einem Sendeelement und wenigstens zwei Empfangselementen, mit einer Steuereinheit (503) und einem Speicher (501),
**dadurch gekennzeichnet, dass**
in dem Speicher (501) wenigstens zwei unterschiedliche Sätze an Kalibrierdaten abgespeichert sind und das Radarfüllstandmessgerät (500) wenigstens einen zusätzlichen Sensor (501a, 502a, 502b, 601) aufweist, wobei das Radarmessgerät (506) als zusätzlichen Sensor einen Abstandssensor (601) zur Ermittlung eines Abstandes des Füllgutes von der Antenne (510) aufweist, wobei die wenigstens zwei unterschiedlichen Sätze an Kalibrierdaten abhängig von dem mittels des Abstandssensors (601) ermittelten Abstand auswählbar sind.

2. Topologieerfassendes Radarfüllstandmessgerät (500) gemäß Anspruch 1,
**dadurch gekennzeichnet, dass**
das Radarfüllstandmessgerät (500) geeignet ausgebildet ist, wenigstens einen weiteren Messwert zusätzlich zu Füllstand und Topologie zu bestimmen.

3. Topologieerfassendes Radarfüllstandmessgerät (500) gemäß Anspruch 2,
**dadurch gekennzeichnet, dass**
ein für die Messung von Füllstand und Topologie eingesetzter Satz an Kalibrierdaten abhängig von dem weiteren Messwert ausgewählt ist.

4. Topologieerfassendes Radarfüllstandmessgerät (500) gemäß einem der vorhergehenden Ansprüche,
**dadurch gekennzeichnet, dass**
das Radarmessgerät (500) als zusätzlichen Sensor wenigstens einen Temperatursensor (502a) aufweist.

5. Topologieerfassendes Radarfüllstandmessgerät (500) gemäß Anspruch 4,
**dadurch gekennzeichnet, dass**
ein Temperatursensor (502b) im Bereich der Antenne (510) angeordnet ist.

6. Topologieerfassendes Radarfüllstandmessgerät (500) gemäß Anspruch 4 oder 5,
**dadurch gekennzeichnet, dass**
ein Temperatursensor (502a) im Bereich einer Elektronik angeordnet ist.

7. Topologieerfassendes Radarfüllstandmessgerät gemäß einem der vorhergehenden Ansprüche,
**dadurch gekennzeichnet, dass**
das Radarmessgerät (506) als zusätzlichen Sensor einen Lagesensor aufweist.

8. Verfahren zum Kalibrieren eines topologieerfassenden Radarfüllstandmessgeräts (500) zum Bestimmen eines Füllstandes und einer Topologie eines Füllgutes mit einer Radareinheit (402, 506) einer Antenne (510) mit wenigstens einem Sendeelement und wenigstens zwei Empfangselementen, mit einer Steuereinheit (503) und einem Speicher (501)
**dadurch gekennzeichnet, dass**
bei einer Kalibrierung des Radarfüllstandmessgeräts (500) wenigstens zwei unterschiedliche Sätze an Kalibrierdaten ermittelt und in dem Speicher (501) abgespeichert werden, wobei das Radarmessgerät als wenigstens einen zusätzlichen Sensor einen Abstandssensor (601) zur Ermittlung eines Abstandes des Füllgutes von der Antenne (510) aufweist und die wenigstens zwei unterschiedlichen Sätze an Kalibrierdaten abhängig von dem Abstand des Füllgutes von der Antenne (510) ermittelt werden.

9. Verfahren gemäß Anspruch 8,
**dadurch gekennzeichnet, dass**
die wenigstens zwei unterschiedlichen Sätze an Kalibrierdaten zusätzlich abhängig von einer Temperatur und/oder von einer Lage des Radarfüllstandmessgeräts (500) ermittelt werden.

10. Verfahren zum Betreiben eines topologieerfassenden Radarfüllstandmessgeräts (500) zum Bestimmen eines Füllstandes und einer Topologie eines Füllgutes mit einer Radareinheit (402, 506) einer Antenne (510) mit wenigstens einem Sendeelement und wenigstens zwei Empfangselementen, mit einer Steuereinheit (503) und einem Speicher (501) mit wenigstens zwei Sätzen an Kalibrierdaten
**dadurch gekennzeichnet, dass**
einer von wenigstens zwei Sätzen an Kalibrierdaten auswählbar ist, wobei der Satz von Kalibrierdaten abhängig von Umgebungsbedingungen des Radarfüllstandmessgeräts ausgewählt wird, wobei das Radarmessgerät als wenigstens einen zusätzlichen Sensor einen Abstandssensor (601) zur Ermittlung eines Abstandes des Füllgutes von der Antenne (510) aufweist und der Satz von Kalibrierdaten abhängig von dem Abstand des Füllgutes von der Antenne (510) ausgewählt wird.

11. Verfahren gemäß Anspruch 10,
**dadurch gekennzeichnet, dass**
der Satz von Kalibrierdaten nutzerseitig vorgebbar ist.

12. Verfahren gemäß Anspruch 10,
**dadurch gekennzeichnet, dass**
der Satz von Kalibrierdaten zusätzlich abhängig von einer Temperatur und/oder einer Lage ausgewählt wird.

13. Verfahren gemäß einem der Ansprüche 10 bis 12,
**dadurch gekennzeichnet, dass**
dass eine Häufigkeit der Auswahl des Satzes von Kalibrierdaten abhängig von einer Änderungsgeschwindigkeit der Umgebungsbedingungen und einer Messfrequenz ist.

14. Verfahren gemäß einem der Ansprüche 10 bis 12,
**dadurch gekennzeichnet, dass**
der Satz von Kalibrierdaten vor jeder Messung ausgewählt wird.

15. Computerprogrammcode, der, wenn er von einem Prozessor eines topologieerfassenden Radarfüllstandmessgeräts gemäß einem der Ansprüche 1 bis 7 ausgeführt wird, dieses dazu veranlasst, das Verfahren gemäß einem der Ansprüche 10 bis 14 auszuführen.

## Claims

1. A topology-detecting radar level measuring device (500) for determining a filling level and a topology of a filling material with a radar unit (506), an antenna (510) with at least one transmitting element and at least two receiving elements, with a control unit (503) and a storage (501),
**characterized in that**
at least two different sets of calibrating data are stored in the storage (501) and the radar level measuring device (500) has at least one additional sensor (501a, 502a, 502b, 601), wherein the radar measuring device (506) has a distance sensor (601) as an additional sensor for determining a distance of the filling material from the antenna (510), wherein the at least two different sets of calibration data can be selected depending on the distance determined by means of the distance sensor (601).

2. The topology-detecting radar level measuring device (500) according to claim 1,
**characterized in that**
the radar level measuring device (500) is suitably configured to determine at least one further measurement value in addition to the filling level and the topology.

3. The topology-detecting radar level measuring device (500) according to claim 2,
**characterized in that**
a set of calibrating data used for measuring the filling level and topology is selected depending on the further measurement value.

4. The topology-detecting radar level measuring device (500) according toone of the preceding claims,
**characterized in that**
the radar measuring device (500) has as the additional sensor at least one temperature sensor (502a).

5. The topology-detecting radar level measuring device (500) according to claim 4,
**characterized in that**
a temperature sensor (502b) is disposed in the region of the antenna (510).

6. The topology-detecting radar level measuring device (500) according to claim 4 or 5,
**characterized in that**
a temperature sensor (502a) is disposed in the region of an electronic system.

7. The topology-detecting radar level measuring device according to any one of the preceding claims,
**characterized in that**
the radar measuring device (506) has as the additional sensor a position sensor.

8. A method for calibrating a topology-detecting radar level measuring device (500) for determining a filling level and a topology of a filling material with a radar unit (402, 506), an antenna (510) with at least one transmitting element and at least two receiving elements, with a control unit (503) and a storage (501),
**characterized in that**
at least two different sets of calibrating data are determined and stored in the storage (501) during a calibration of the radar level measuring device (500), wherein the radar measuring device has a distance sensor (601) as at least one additional sensor for determining a distance of the filling material from the antenna (510), and the at least two different sets of calibration data are determined as a function of the distance of the filling material from the antenna (510).

9. The method according to claim 8,
**characterized in that**
the at least two different sets of calibrating data are additionally determined depending on a temperature and/or a position of the radar level measuring device (500).

10. A method for operating a topology-detecting radar level measuring device (500) for determining a filling level and a topology of a filling material with a radar unit (402, 506), an antenna (510) with at least one transmitting element and at least two receiving elements, with a control unit (503) and a storage (501) with at least two sets of calibrating data,
**characterized in that**
one of at least two sets of calibrating data is selectable, wherein the set of calibration data is selected depending on environmental conditions of the radar level meter, wherein the radar measuring device has a distance sensor (601) as at least one additional sensor for determining a distance of the filling material from the antenna (510), and the set of calibration data is selected depending on the distance of the product from the antenna (510).

11. The method according to claim 10,
**characterized in that**
the set of calibrating data can be set by a user.

12. The method according to claim 10,
**characterized in that**
the set of calibrating data is additionally selected depending on a temperature and/or a position.

13. The method according to any one of the claims 10 to 12,
**characterized in that**
a frequency of the selection of the set of calibrating data is dependent on a rate of change of environmental conditions and a measuring frequency.

14. The method according to any one of the claims 12 to 15,
**characterized in that**
the set of calibrating data is selected prior to each measurement.

15. A computer program code which, when executed by a processor of a topology-detecting radar level measuring device, causes the latter to execute the method according to any one of the claims 1 to 7.

## Revendications

1. Appareil de mesure (500) de niveau radar à détection de topologie pour déterminer un niveau et une topologie d'un produit de remplissage avec une unité radar (506), une antenne (510) avec au moins un élément émetteur et au moins deux éléments récepteurs, avec une unité de commande (503) et une mémoire (501), **caractérisé en ce que**
au moins deux ensembles différents de données d'étalonnage sont mémorisés dans la mémoire (501) et l'appareil de mesure (500) de niveau radar présente au moins un capteur supplémentaire (501a, 502a, 502b, 601),
dans lequel l'appareil de mesure (506) radar présente en tant que capteur supplémentaire un capteur de distance (601) pour établir une distance du produit de remplissage par rapport à l'antenne (510), dans lequel les au moins deux ensembles différents de données d'étalonnage sont sélectionnables en fonction de la distance établie au moyen du capteur de distance (601).

2. Appareil de mesure (500) de niveau radar à détection de topologie selon la revendication 1, **caractérisé en ce que**
l'appareil de mesure (500) de niveau radar est réalisé de manière appropriée pour déterminer au moins une autre valeur de mesure en plus du niveau et de la topologie.

3. Appareil de mesure (500) de niveau radar à détection de topologie selon la revendication 2, **caractérisé en ce que**
un jeu de données d'étalonnage utilisé pour la mesure du niveau et de la topologie est sélectionné en fonction de la valeur de mesure supplémentaire.

4. Appareil de mesure (500) de niveau radar à détection de topologie selon l'une quelconque des revendications précédentes,
**caractérisé en ce que**
l'appareil de mesure (500) radar présente en tant que capteur supplémentaire au moins un capteur de température (502a).

5. Appareil de mesure(500) de niveau radar à détection de topologie selon la revendication 4, **caractérisé en ce que**
un capteur de température (502b) est disposé dans la zone de l'antenne (510).

6. Appareil de mesure (500) de niveau radar à détection de topologie selon la revendication 4 ou la revendication 5,
**caractérisé en ce que**
un capteur de température (502a) est disposé dans la zone d'une électronique.

7. Détecteur de niveau radar à détection de topologie selon l'une quelconque des revendications précédentes,
**caractérisé en ce que**
l'appareil de mesure (506) radar présente un capteur de position en tant que capteur supplémentaire.

8. Procédé pour étalonner un appareil de mesure (500) de niveau radar à détection de topologie pour déterminer un niveau et une topologie d'un produit de remplissage avec une unité radar (402, 506), une antenne (510) avec au moins un élément émetteur et au moins deux éléments récepteurs, avec une unité de commande (503) et une mémoire (501)
**caractérisé en ce que**
lors d'un étalonnage de l'appareil de mesure (500) de niveau radar, au moins deux ensembles différents de données d'étalonnage sont établis et enregistrés dans la mémoire (501),
dans lequel l'appareil de mesure radar présente en tant qu'au moins un capteur supplémentaire un capteur de distance (601) pour établir une distance du produit de remplissage par rapport à l'antenne (510) et les au moins deux ensembles différents de données d'étalonnage sont établis en fonction de la distance du produit de remplissage par rapport à l'antenne (510).

9. Procédé selon la revendication 8,
**caractérisé en ce que**
les au moins deux ensembles différents de données d'étalonnage sont en outre établis en fonction d'une température et/ou d'une position de l'appareil de mesure (500) de niveau radar.

10. Procédé pour faire fonctionner un appareil de mesure (500) de niveau radar à détection de topologie pour déterminer un niveau et une topologie d'un produit de remplissage avec une unité radar (402, 506), une antenne (510) avec au moins un élément émetteur et au moins deux éléments récepteurs, avec une unité de commande (503) et une mémoire (501) avec au moins deux ensembles de données d'étalonnage
**caractérisé en ce que** l'un parmi au moins deux ensembles de données d'étalonnage est sélectionnable, dans lequel l'ensemble de données d'étalonnage est sélectionné en fonction des conditions environnementales de l'appareil de mesure de niveau radar,
dans lequel l'appareil de mesure radar présente, en tant qu'au moins un capteur supplémentaire, un capteur de distance (601) pour établir une distance du produit de remplissage par rapport à l'antenne (510) et l'ensemble de données d'étalonnage est sélectionné en fonction de la distance du produit de remplissage par rapport à l'antenne (510).

11. Procédé selon la revendication 10,
**caractérisé en ce que**
l'ensemble de données d'étalonnage peut être spécifié par l'utilisateur.

12. Procédé selon la revendication 10,
**caractérisé en ce que**
l'ensemble de données d'étalonnage est en outre sélectionné en fonction d'une température et/ou d'une position.

13. Procédé selon l'une quelconque des revendications 10 à 12,
**caractérisé en ce que**
une fréquence de sélection de l'ensemble de données d'étalonnage dépend d'une vitesse de changement des conditions environnementales et d'une fréquence de mesure.

14. Procédé selon l'une quelconque des revendications 10 à 12,
**caractérisé en ce que**
l'ensemble de données d'étalonnage est sélectionné avant chaque mesure.

15. Code de programme informatique qui, lorsqu'exécuté par un processeur d'un appareil de mesure de niveau radar à détection topologique selon l'une quelconque des revendications 1 à 7, amène celui-ci à exécuter le procédé selon l'une quelconque des revendications 10 à 14.
